(19) Europäisches Patentamt
European Patent Office
Office européen des brevets

(11) **EP 3 015 829 A1**

(12) **EUROPÄISCHE PATENTANMELDUNG**

(43) Veröffentlichungstag:
04.05.2016 Patentblatt 2016/18

(51) Int Cl.:
*G01F 3/10* (2006.01)

(21) Anmeldenummer: 15183251.6

(22) Anmeldetag: 01.09.2015

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: 28.10.2014 DE 102014115663

(71) Anmelder: **KEM Küppers Elektromechanik GmbH 85757 Karlsfeld (DE)**

(72) Erfinder:
• **FRISCH, Jürgen 86420 Diedorf (DE)**

• **BIELING, Harald 85256 Pasenbach (DE)**
• **STEUER, Thomas 85221 Dachau (DE)**
• **BOGUHN, Dirk 81245 München (DE)**

(74) Vertreter: **Heim, Florian Andreas et al Weber & Heim Patentanwälte Partnerschaftsgesellschaft mbB Irmgardstraße 3 81479 München (DE)**

(54) **SPINDELDURCHFLUSSMESSER**

(57) Die Erfindung betrifft einen Spindeldurchflussmesser mit einem Gehäuse, welches zwei Aussparungen aufweist. In den Aussparungen sind zwei mehrgängige Schraubenspindeln angeordnet, die drehbar im Gehäuse vorgesehen sind. Erfindungsgemäß ist vorgesehen, dass die Wälzkreisdurchmesser der beiden Schraubenspindeln gleich groß sind.

Fig. 1

**Beschreibung**

Die Erfindung betrifft einen Spindeldurchflussmesser mit einem Gehäuse, welches eine erste und eine zweite zylinderförmige Aussparung aufweist. Diese Aussparungen sind parallel zueinander und sich zumindest teilweise überschneidend angeordnet. In den beiden Aussparungen sind jeweils eine erste und eine zweite mehrgängige Schraubenspindel angeordnet, welche ineinandergreifend und frei drehbar im Gehäuse befestigt sind. Hierbei ist der Durchmesser der ersten Aussparung im Wesentlichen gleich dem Kopfkreisdurchmesser der ersten Schraubenspindel und der Durchmesser der zweiten Aussparung im Wesentlichen gleich dem Kopfkreisdurchmesser der zweiten Schraubenspindel.

Derartige Spindeldurchflussmesser werden zur Bestimmung des Durchflusses eines Fluides verwendet. Sie werden beispielsweise in Zapfsäulen bei Tankstellen eingesetzt, um die abgegebene Kraftstoffmenge zu bestimmen, welche Grundlage der Rechnungslegung ist.

Das Fluid strömt zwischen den ineinandergreifenden Schraubenspindeln hindurch und versetzt diese dabei in Drehung. Exakter ausgedrückt besteht zwischen den ineinandergreifenden Schraubenspindeln jeweils ein Förderraum, in dem ein Teil des Fluides von Beginn des Schraubenspindelpaares zu seinen Ende befördert wird. Hierbei drehen sich die Schraubenspindeln. Die Drehung zumindest einer der Schraubenspindeln wird detektiert. Mittels der Umdrehung der Schraubenspindeln sowie des Förderraumes beziehungsweise dessen Transportvolumens kann somit die durch den Spindeldurchflussmesser geflossene Fluidmenge bestimmt werden.

Gerade bei der Abgabe an Zapfsäulen besteht eine hohe Anforderung an die Messgenauigkeit, die sich auch bei längerer Verwendung nicht verringern darf.

Gattungsgemäße Spindeldurchflussmesser sind beispielsweise aus der DE 195 13 781 B4, der DE 42 08 869 A1 oder der WO 93/12405 bekannt.

Der Erfindung liegt die **Aufgabe** zugrunde, einen Spindeldurchflussmesser zu schaffen, welcher ein Messen mit einer hohen Genauigkeit ermöglicht.

Diese Aufgabe wird erfindungsgemäß durch einen Spindeldurchflussmesser mit den Merkmalen des Anspruchs 1 gelöst.

Vorteilhafte Ausführungen der Erfindung sind in den Unteransprüchen und der Beschreibung angegeben.

Ein gattungsgemäßer Spindeldurchflussmesser ist gemäß der Erfindung dadurch weitergebildet, dass die Wälzkreisdurchmesser der ersten und der zweiten Schraubenspindel gleich groß sind.

Im Sinne der Erfindung kann vereinfacht der Wälzkreisdurchmesser, welcher auch als Teilkreisdurchmesser bezeichnet wird, durch folgende Formel definiert werden:

$$Wälzkreisdurchmesser = \frac{Fußkreisdurchmesser + Kopfkreisdurchmesser}{2}$$

Bei verzahnten Bauteilen verhält sich der Kopfkreisdurchmesser äquivalent zu der Anzahl der Zähne. So bestimmen sich für ein Zahnradgetriebe mit dem Übersetzungsverhältnis i,

$$i = \frac{z_1}{z_2}$$

wobei $z_1$ die Anzahl der Zähne des ersten Zahnrades und $z_2$ die Anzahl der Zähne des zweiten Zahnrades ist, die Kopfkreisdurchmesser durch

$$d_{a1} = \frac{z_1}{z_2} \times d_{a2}$$

wobei $d_{a1}$ und $d_{a2}$ die Kopfkreisdurchmesser der beiden Zahnräder sind.

Hierbei sind nur kleinere Abweichungen von dem Kopfkreisdurchmesser möglich, da ansonsten die Wälzfähigkeit des Zahnradgetriebes beeinträchtigt würde. Diese Verhältnismäßigkeit gilt analog auch für den Wälzkreisdurchmesser.

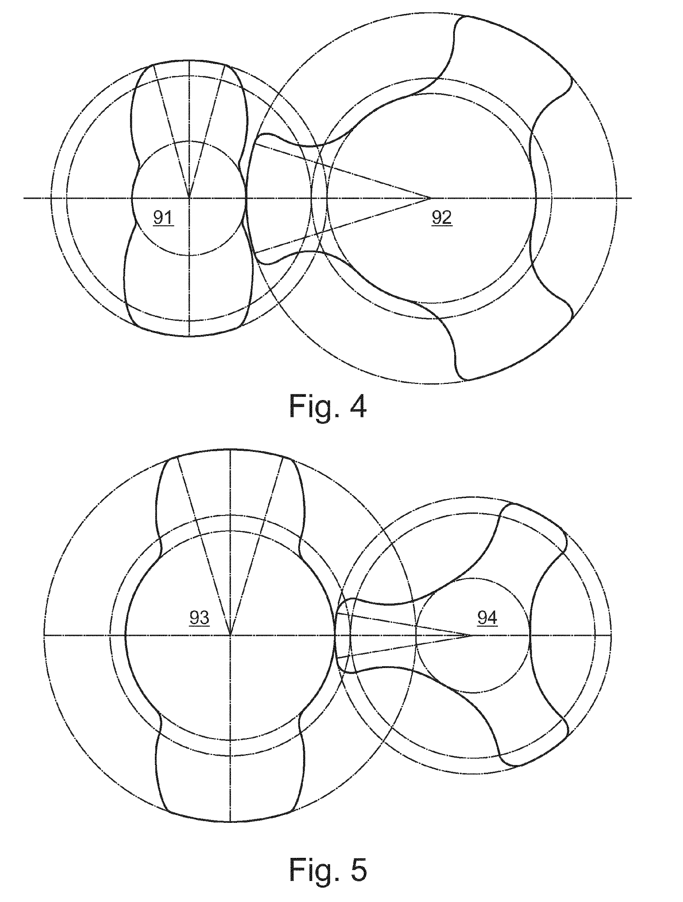

Zur Verdeutlichung wird hierzu auf Fig. 4 verwiesen, die einen Querschnitt durch zwei miteinander in Eingriff stehende Schraubenspindeln 91, 92 darstellt.

Wie insbesondere aus Fig. 4 ersichtlich ist, hat die Schraubenspindel 92 mit den drei Zähnen beziehungsweise geschnittenen Flügeln einen größeren Kopfkreisdurchmesser als die kleinere Schraubenspindel 91 mit den zwei geschnittenen Flügeln. Eine derartige Ausführung ermöglicht gute Abwälzeigenschaften, die zur Übertragung von Drehmomenten von einer Schraubenspindel 91 auf die andere Schraubenspindel 92 vorteilhaft sind.

Durch diese Formgebung ergibt sich jedoch bei der Verwendung in Spindeldurchflussmessern der Nachteil, dass nur ein sehr geringes Transportvolumen für das zu messende Fluid zur Verfügung steht. Anders ausgedrückt ist eine derartige Dimensionierung eher nicht praktikabel.

Demnach wird das oben beschriebene Verhältnis für typische Schraubenspindeln in Pump- oder Messspindelanordnungen umgedreht, wie es exemplarisch in Fig. 5 dargestellt ist.

Hierbei weist die Schraubenspindel 93 mit dem größeren Kopfkreisdurchmesser die geringere Zahl an Flügeln auf. In diesem Fall ist die größere Schraubenspindel 93 mit zwei Flügel- oder Schraubengängen ausgestaltet, wohingegen die kleinere Spindel 94 mit drei Flügeln ausgestaltet ist. Derartige Dimensionierungen weisen ein relativ großes Transportvolumen auf, haben jedoch durch die Abweichung vom zuvor beschriebenen Standard schlechte Wälzeigenschaften. Mit anderen Worten gleiten die Bauteile mehr aufeinander ab, als dass sie aufeinander abwälzen. Dies hat zur Folge, dass derart dimensionierte Spindeldurchflussmesser beispielsweise ein schlechtes Anlaufverhalten aufweisen.

Dies wurde entsprechend der Erfindung erkannt. Daher liegt ein Grundgedanke der Erfindung darin, von dem gängigen Verhältnis der beiden Schraubenspindeln zueinander abzuweichen und die beiden im Spindeldurchflussmesser verwendeten Schraubenspindeln derart auszubilden, dass sie einen im Wesentlichen gleich großen Wälzkreisdurchmesser aufweisen.

Dies hat zur Folge, dass zwar das Transportvolumen im Vergleich zur herkömmlichen Dimensionierung, wie in Fig. 5 gezeigt, verringert wird, sich jedoch die Wälzeigenschaften deutlich verbessern. Somit sind die Schraubenspindeln im erfindungsgemäßen Spindeldurchflussmesser leichtgängiger, als bei herkömmlichen Konstruktionen. Hierdurch haben sie ein besseres Anlaufverhalten und können auch leichter mit einer höheren Umdrehungszahl betrieben werden, was wiederum das geringere Transportvolumen ausgleicht.

Auch ergibt sich durch die besseren Wälzeigenschaften eine höhere Genauigkeit und ein geringerer Drift bei der Messgenauigkeit.

In einer vorteilhaften Ausgestaltung der Erfindung sind auch die Fußkreisdurchmesser der beiden Schraubenspindeln gleich groß. Alternativ oder zusätzlich hierzu können auch die Kopfkreisdurchmesser der beiden Schraubenspindeln gleich groß ausgebildet sein. Mit anderen Worten können Schraubenspindeln verwendet werden, die jeweils denselben Fußkreisdurchmesser wie auch jeweils denselben Kopfkreisdurchmesser aufweisen und sich lediglich in der Anzahl der Gänge oder Flügel unterscheiden.

Bevorzugt ist es, wenn die erste und die zweite Schraubenspindel jeweils gleich lang ausgeführt sind. Eine derartige Ausführung ermöglicht eine einfache Konstruktion des Spindeldurchflussmessers, da für die Befestigung der beiden Schraubenspindeln innerhalb des Gehäuses des Spindeldurchflussmessers im Wesentlichen dasselbe Prinzip verwendet werden kann.

Vorteilhaft ist es hierbei, wenn die erste und die zweite Schraubenspindel in Durchflussrichtung versetzt zueinander angeordnet sind, wobei ein Überschneidungsbereich vorhanden ist, in dem die beiden Schraubenspindeln ineinandergreifen. Das Vorsehen eines Versatzes ermöglicht im Wesentlichen, dass der Platz innerhalb des Gehäuses gut ausgenutzt werden kann, und so die generelle Baugröße des Spindeldurchflussmessers verringert werden kann.

Grundsätzlich können die Zu- und Abflusskanäle für das Fluid an beliebigen Stellen an dem Spindeldurchflussmesser angeordnet sein. Vorteilhaft ist es jedoch, wenn ein Zufluss- und ein Abflusskanal koaxial zu den Achsen der ersten und der zweiten Schraubenspindel vorgesehen sind und die Kanäle jeweils im Bereich der beiden Schraubenspindeln enden. Mit anderen Worten wird das zu messende Fluid von vorne in Achsrichtung der Schraubenspindeln dem Spindeldurchflussmesser zugeführt und hinten ebenfalls in Achsrichtung wieder abgegeben. Auch dies ermöglicht neben geringeren Strömungsverlusten eine besonders kompakte Bauform.

Bevorzug ist es, wenn die erste und die zweite Aussparung mittels Bohrungen in dem Gehäuse erzeugt sind. Dies ist möglich, da die Zu- und Abflusskanäle ebenfalls in Richtung der Achsen der Aussparungen, welche gleich den Achsen der Schraubenspindeln sind, verlaufen.

Vorteilhafterweise weist das Gehäuse zwei deckelartige Abschlusselemente auf, durch welche sich der Zuflusskanal beziehungsweise Abflusskanal hindurch erstreckt. Die Abschlusselemente dienen zum einen dazu, die Schraubenspindeln mit ihren Lagern im Gehäuse zu befestigen und zum anderen dazu, dieses fluiddicht abzuschließen. Die Abdeckelemente können ferner Anschlussvorrichtungen, beispielsweise für Rohre oder andere Leitungen aufweisen, damit das zu messende Fluid zu dem Spindeldurchflussmesser geführt und von diesem wieder abgeführt werden kann.

Zum Messen der Spindelumdrehung sind bevorzugt an oder in dem Gehäuse seitlich zu einer der beiden Schraubenspindeln zwei Sensoren zur Detektion eines an dem Sensor vorbeidrehenden Flügels eine der beiden Schraubenspindeln vorgesehen. Bei diesen Sensoren kann es sich beispielsweise um Hallsensoren handeln, die eine Änderung des Magnetfeldes durch den vorbeidrehenden Flügel einer Schraubenspindel detektieren. Grundsätzlich sind jedoch auch andere Sensortypen, beispielsweise kapazitive Sensoren, möglich.

Im Sinne der Erfindung kann als Flügel eine Schraubenspindel, insbesondere die Erhebung zwischen zwei Gewindegängen, betrachtet werden.

**[0029]** Vorteilhaft ist es, wenn die beiden Aussparungen sowie die beiden Schraubenspindeln derart dimensioniert sind, dass mehr als 300 Impulse pro Liter durchfließendes Fluid jeweils an einem Sensor erzeugt werden. Eine derartige Auslegung ist vorteilhaft, um eine genügend hohe Messgenauigkeit, insbesondere zur Verwendung bei Tankstellen, zu erreichen. Bevorzugt ist hierbei, wenn sogar noch mehr Impulse, beispielsweise 400 Impulse pro Liter durchfließendem Medium, von jedem Sensor erzeugt werden.

**[0030]** Zur Verbesserung der Gleiteigenschaften und/oder zur Erhöhung der Korrosions- und/oder Abrasionsbeständigkeit der Schraubenspindeloberflächen können diese beschichtet, beispielsweise mit TLC, und/oder gehärtet ausgeführt sein.

**[0031]** Bevorzugt ist es, wenn die Schraubenspindeln eine Teilung von 2:3 aufweisen. Der Begriff "Teilung" im Sinne der Erfindung definiert die Anzahl der Flügel oder Schraubengänge der beiden Schraubenspindeln zueinander. Dies bedeutet, dass bei der bevorzugten Teilung von 2:3 eine Schraubenspindel zwei Flügel und die andere drei Flügel aufweist. Grundsätzlich sind auch andere Teilungen, wie beispielsweise 3:4 oder 4:5 denkbar. Es sind auch andere Teilungen möglich.

**[0032]** Eine Teilung von 2:3 ist bevorzugt, da sie eine gute Kombination aus nutzbarem Transportvolumen pro Umdrehung der Schraubenspindeln für das zu transportierende Fluid und minimaler hierfür notwendiger Schraubenspindellänge darstellt.

**[0033]** Die Erfindung wird nachfolgend anhand eines schematischen Ausführungsbeispiels unter Bezugnahme auf die Figuren näher erläutert. Hierbei zeigen:

Fig. 1 eine dreidimensionale teilweise transparente Darstellung eines erfindungsgemäßen Spindeldurchflussmessers;

Fig. 2 einen ausschnittsweisen Längsschnitt durch einen erfindungsgemäßen Spindeldurchflussmesser;

Fig. 3 einen Querschnitt durch zwei Schraubenspindeln entsprechend der Erfindung;

Fig. 4 einen Querschnitt durch zwei Schraubenspindeln zur Erläuterung der Wälzeigenschaften; und

Fig. 5 einen Querschnitt durch zwei Schraubenspindeln entsprechend eines Spindeldurchflussmessers des Standes der Technik.

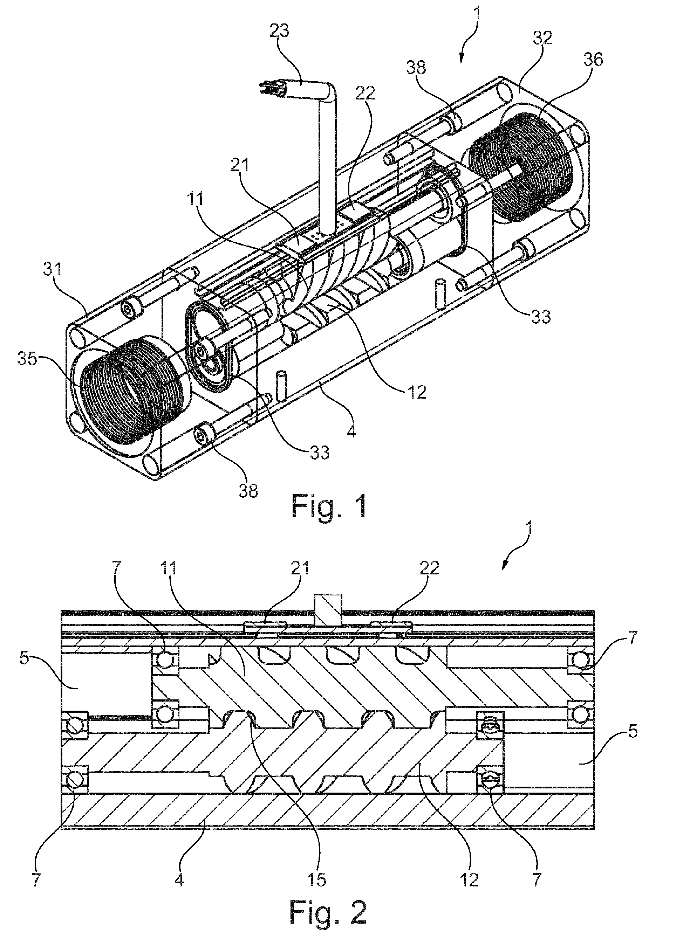

**[0034]** In Fig. 1 ist eine perspektivische transparente Ansicht eines erfindungsgemäßen Spindeldurchflussmessers 1 dargestellt, welcher in Fig. 2 in einem ausschnittsweisen Längsschnitt gezeigt ist.

**[0035]** Im Folgenden wird der grundsätzliche Aufbau des erfindungsgemäßen Spindeldurchflussmessers 1 anhand der beiden Figuren 1 und 2 näher erläutert.

**[0036]** Der Spindeldurchflussmesser 1 besteht aus einem Gehäuse 4, welches ein vorderes und hinteres Abschlusselement 31, 32 aufweist. Im vorderen Abschlusselement 31 befindet sich eine Öffnung mit einem Innengewinde, welche einen Zuflusskanal 35 für das zu messende Fluid ausbildet. In analoger Weise weist das hintere Abschlusselement 32 eine Öffnung, welche mit ebenfalls einem Innengewinde versehen ist, für einen Abflusskanal 36 auf.

**[0037]** Die beiden Abschlusselemente 31, 32 sind mittels Schrauben 38 am Gehäuse 4 des Spindeldurchflussmessers 1 befestigt. Hierbei ist am Übergang zwischen dem Zuflusskanal 35 und dem Abflusskanal 36 zum eigentlichen Gehäuse 4 jeweils eine Dichtung 33 vorgesehen.

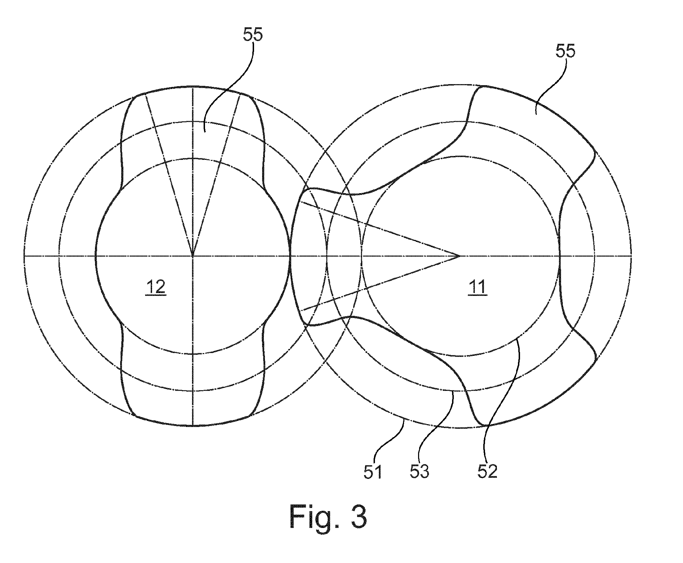

**[0038]** Im Gehäuse 4 befinden sich in zwei Aussparungen zwei Schraubenspindeln 11, 12. Diese Aussparungen können bevorzugt durch zwei entsprechende Bohrungen erzeugt werden. Die Schraubenspindeln 11, 12 weisen, wie später in Bezug auf Fig. 3 noch genauer erläutert, jeweils denselben Wälzkreisdurchmesser auf.

**[0039]** Die beiden Schraubenspindeln 11, 12 sind leicht versetzt zueinander in dem Gehäuse 4 angeordnet. Sie sind mittels Wälzlagern 7 und Spacern 5 in dem Gehäuse 4 befestigt. Die Spacer 5 beziehungsweise Wälzlager 7 wiederum werden durch Anschrauben der beiden Abschlusselemente 31, 32 im Gehäuse fixiert.

**[0040]** Strömt nun ein zu messendes Fluid, insbesondere eine Flüssigkeit, durch den Zuflusskanal 35 in Richtung der beiden Schraubenspindeln 11, 12, so werden diese in Rotation versetzt und befördern Teilmengen des Fluides in Förderräumen 15 in Richtung des Abflusskanals 36. Die Förderräume 15, welche auch als Transportvolumen bezeichnet werden können, entstehen durch das Ineinandergreifen der beiden Schraubenspindeln 11, 12, welche eine entsprechende Geometrie aufweisen.

**[0041]** Die Drehung der Schraubenspindel 11 wird durch zwei Sensoren 21, 22 detektiert. Hierbei kann es sich beispielsweise um Hallsensoren handeln, die ein Vorbeidrehen eines Flügels 55 der Schraubenspindel 11 durch eine Änderung des Magnetfeldes erkennen. Es kann aber auch vorgesehen sein, dies durch andere Sensoren zu detektieren. Hierzu könnten beispielsweise kapazitive Sensoren eingesetzt werden. Die beiden Sensoren 21, 22 leiten ihre Impulse über ihr Anschlusskabel 23 zu einer Auswerteeinheit weiter.

In Fig. 3 ist ein schematisierter Querschnitt durch die Schraubenspindeln 11, 12 des erfindungsgemäßen Spindeldurchflussmessers 1 dargestellt.

Hierbei sind insbesondere der Kopfkreis 51, der Fußkreis 52 sowie der Wälzkreis 53 verdeutlicht. Wie aus Fig. 3 ersichtlich, ist der Fußkreis 52 ein Kreis um den Mittelpunkt beziehungsweise die Achse der Schraubenspindel, welche die Punkte mit der geringsten Erhebung verbindet.

Im Gegensatz dazu ist der Kopfkreis 51 wiederum ein Kreis um den Mittelpunkt beziehungsweise die Achse der Schraubenspindel, welcher die Punkte mit dem größten Abstand vom Mittelpunkt miteinander verbindet.

Der Wälzkreis 53, welcher auch als Teilkreis bezeichnet wird, befindet sich zwischen Kopfkreis 51 und Fußkreis 52 und kann im Rahmen der Erfindung durch folgende Formel definiert werden:

$$W\ddot{a}lzkreisdurchmesser = \frac{Fu\beta kreisdurchmesser + Kopfkreisdurchmesser}{2}$$

Durch eine derartige Auslegung der beiden Schraubenspindeln 11, 12 ist es möglich, dass diese ein relativ gutes Abwälzverhalten aufeinander aufweisen und dennoch einen genügend großen Förderraum 15 besitzen, so dass das zu messende Fluid in akzeptablen Mengen durch die beiden Schraubenspindeln 11, 12 gefördert werden kann.

In der hier dargestellten Ausführungsform ist die Schraubenspindel 11 mit drei Flügeln 55 und die Schraubenspindel 12 mit zwei Flügeln 55 dargestellt. Im Sinne der Erfindung wird als Flügel insbesondere die Erhebung zwischen zwei Gängen einer Schraubenspindel 11, 12 bezeichnet. Ein Flügel entspricht im Querschnitt im Wesentlichen der Erhebung beziehungsweise dem Zahn eines Zahnrades. Grundsätzlich können auch Schraubenspindeln 11, 12 mit mehr Gängen, also mehr Flügeln, verwendet werden. Beispielsweise sind auch Schraubenspindelpaare mit 3 und 4 Flügeln möglich.

Mit dem erfindungsgemäßen Spindeldurchflussmesser 1 ist es somit möglich, hochgenaue Fluiddurchflussmessungen mit einer hohen Langzeitgenauigkeit durchzuführen.

**Patentansprüche**

1. Spindeldurchflussmesser (1) mit
einem Gehäuse (4) mit einer ersten und einer zweiten zylinderförmigen Aussparung, welche sich überschneiden und parallel zueinander angeordnet sind, in welchem eine erste (11) und eine zweite (12) mehrgängige Schraubenspindel ineinandergreifend angeordnet sind, welche jeweils frei drehbar im Gehäuse (4) befestigt sind,
wobei der Durchmesser der ersten Aussparung im Wesentlichen dem Kopfkreisdurchmesser (51) der ersten Schraubenspindel (11) und der Durchmesser der zweiten Aussparung im Wesentlichen dem Kopfkreisdurchmesser (51) der zweiten Schraubenspindel (12) entspricht,
**dadurch gekennzeichnet,**
**dass** die Wälzkreisdurchmesser (53) der ersten und der zweiten Schraubenspindel (11, 12) gleich groß sind.

2. Spindeldurchflussmesser (1) nach Anspruch 1,
**dadurch gekennzeichnet,**
**dass** der Fußkreisdurchmesser (52) der ersten Schraubenspindel (11) und der Fußkreisdurchmesser (52) der zweiten Schraubenspindel (12) gleich groß sind.

3. Spindeldurchflussmesser (1) nach einem der Ansprüche 1 oder 2,
**dadurch gekennzeichnet,**
**dass** der Kopfkreisdurchmesser (51) der ersten Schraubenspindel (11) und der Kopfkreisdurchmesser (51) der zweiten Schraubenspindel (12) gleich groß sind.

4. Spindeldurchflussmesser (1) nach einem der Ansprüche 1 bis 3,
**dadurch gekennzeichnet,**
**dass** die erste und die zweite Schraubenspindel (11, 12) gleich lang sind.

5. Spindeldurchflussmesser (1) nach einem der Ansprüche 1 bis 4,
**dadurch gekennzeichnet,**
**dass** die erste und die zweite Schraubenspindel (11, 12) in Durchflussrichtung versetzt zueinander angeordnet sind, wobei ein Überschneidungsbereich vorhanden ist.

**6.** Spindeldurchflussmesser (1) nach einem der Ansprüche 1 bis 5,
**dadurch gekennzeichnet,**
**dass** ein Zufluss- (35) und ein Abflusskanal (36) koaxial zu den Achsen der ersten und der zweiten Schraubenspindel (11, 12) vorgesehen sind, welche jeweils im Bereich der beiden Schraubenspindeln (11, 12) enden.

**7.** Spindeldurchflussmesser (1) nach einem der Ansprüche 1 bis 6,
**dadurch gekennzeichnet,**
**dass** die erste und die zweite Aussparung mittels Bohrungen in dem Gehäuse (4) erzeugt sind.

**8.** Spindeldurchflussmesser (1) nach einem der Ansprüche 1 bis 7,
**dadurch gekennzeichnet,**
**dass** das Gehäuse (4) je zwei deckelartige Abschlusselemente (31, 32) aufweist, durch welche sich der Zuflusskanal (35) beziehungsweise Abflusskanal (36) hindurch erstreckt.

**9.** Spindeldurchflussmesser (1) nach einem der Ansprüche 1 bis 8,
**dadurch gekennzeichnet,**
**dass** an dem Gehäuse (4) seitlich zu einer der beiden Schraubenspindeln (11, 12) zwei Sensoren (21, 22) zur Detektion eines an den Sensoren (21, 22) vorbeidrehenden Flügels (55) einer der beiden Schraubenspindeln (11, 12) vorgesehen sind.

**10.** Spindeldurchflussmesser (1) nach einem der Ansprüche 1 bis 9,
**dadurch gekennzeichnet,**
**dass** die Aussparungen sowie die Schraubenspindeln (11, 12) derart dimensioniert sind, dass mehr als 300 Impulse pro Liter durchfließendem Fluid jeweils an den Sensoren (21, 22) erzeugt werden.

**11.** Spindeldurchflussmesser (1) nach einem der Ansprüche 1 bis 10,
**dadurch gekennzeichnet,**
**dass** die Schraubenspindeln (11, 12) eine Teilung von 2:3 aufweisen.

Fig. 1

Fig. 2

EP 3 015 829 A1

Fig. 3

8

Fig. 4

Fig. 5

Europäisches
Patentamt

European
Patent Office

Office européen
des brevets

# EUROPÄISCHER RECHERCHENBERICHT

**Nummer der Anmeldung**

EP 15 18 3251

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 488 565 A (EDWARD NUEBLING [US]; EDWARD FRANKLIN CURTIS [US]) 21. Oktober 1918 (1918-10-21) * Seite 1, Zeile 1 - Zeile 10; Abbildungen 1-3 * * Seite 5, Zeile 33 - Zeile 62 * ----- | 1-11 | INV. G01F3/10 |
| X | FR 1 103 494 A (PAUL ANDRÉ GUINARD) 3. November 1955 (1955-11-03) * Seite 1, Absatz 1; Abbildungen 1-3 * ----- | 1-11 | |
| X | EP 2 256 468 A1 (OVAL CORP [JP]) 1. Dezember 2010 (2010-12-01) * Absatz [0029]; Abbildung 1 * ----- | 1-5 | |
| A,D | DE 195 13 781 B4 (KRAEUTLER GES M B H & CO [AT]) 20. Januar 2005 (2005-01-20) * Abbildungen 1,2 * ----- | 6-11 | |

**RECHERCHIERTE SACHGEBIETE (IPC)**

G01F

Der vorliegende Recherchenbericht wurde für alle Patentansprüche erstellt

| Recherchenort | Abschlußdatum der Recherche | Prüfer |
|---|---|---|
| Den Haag | 3. März 2016 | Bourhis, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 3251

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2016

| Im Recherchenbericht angeführtes Patentdokument | Datum der Veröffentlichung | Mitglied(er) der Patentfamilie | Datum der Veröffentlichung |
|---|---|---|---|
| FR 488565 A | 21-10-1918 | KEINE | |
| FR 1103494 A | 03-11-1955 | KEINE | |
| EP 2256468 A1 | 01-12-2010 | CN 101960265 A | 26-01-2011 |
| | | EP 2256468 A1 | 01-12-2010 |
| | | JP 4252614 B1 | 08-04-2009 |
| | | JP 2009210329 A | 17-09-2009 |
| | | KR 20100122108 A | 19-11-2010 |
| | | TW 200938813 A | 16-09-2009 |
| | | US 2010307234 A1 | 09-12-2010 |
| | | WO 2009110108 A1 | 11-09-2009 |
| DE 19513781 B4 | 20-01-2005 | AT 400766 B | 25-03-1996 |
| | | DE 19513781 A1 | 09-11-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19513781 B4
- DE 4208869 A1

- WO 9312405 A